# EUROPEAN PATENT APPLICATION

(11) **EP 4 648 263 A1**
(43) Date of publication of application: **12.11.2025**
(21) Application number: 24738639.4
(22) Date of filing: 04.01.2024
(51) Int. Cl.: H02K 3/04, H02K 3/47

(54) **STATOR STRUCTURE OF ROTATING ELECTRIC MACHINE**

(30) Priority: 05.01.2023 JP 2023000645
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: YOKOYAMA, Akiyuki, Tokyo 105-0023 (JP); NAKAYAMA, Tadahiro, Tokyo 105-0023 (JP); AWAZU, Minoru, Tokyo 105-0023 (JP)
(74) Representative: Hoffmann Eitle
(86) International application number: PCT/JP2024/000021
(87) International publication number: WO 2024/147349

(57) **Abstract**

In an embodiment, a stator structure in a rotating electric machine includes an inner coil layer and an outer coil layer. In the inner coil layer, a plurality of coreless inner coils are arranged side by side in a circumferential direction. In the outer coil layer, a plurality of coreless outer coils are arranged side by side in the circumferential direction on an outer peripheral side of the inner coil layer in a state not contacting the inner coils. Each coil pitch of the inner coils and the outer coils is equal to or greater than an angle obtained by dividing 360° by a total number of the inner coils and the outer coils.

## Description

### FIELD

Embodiments of the present invention relate to a stator structure in a rotating electric machine.

### BACKGROUND

A rotating electric machine such as an electric motor or a generator includes a stator and a rotor. In electric motors, a rotating magnetic field is generated by applying a voltage to a coil of the stator. Then, the rotor is rotated by the generated rotating magnetic field, or an electromotive force is induced on the rotor by the rotating magnetic field, and the rotor is rotated by the induced electromotive force. In generators, a voltage (electromotive force) is induced on a coil of the stator by a rotating magnetic field generated by rotation of the rotor. In this rotating electric machine such as the electric motor and the generator, a coreless coil may be used as the coil of the stator from the viewpoint of weight reduction and the like. In this case, in the stator, a plurality of coreless coils are arranged side by side in a circumferential direction. A coil of a normal motor is provided with an iron core that serves as a path of an interlinking magnetic flux, but there is a method of not using an iron core, and this method is generally called "coreless" (no iron core), and a coil adopting the coreless method is called a coreless coil. A coreless motor has no iron core, and thus has a feature wherein the weight is lighter than that of a normal motor.

For the rotating electric machine in which the coreless coils are used in the stator as described above, there is a demand to increase the amount of interlinking magnetic flux that interlinks with the coils of the stator in the generated rotating magnetic field by, for example, increasing each coil pitch of the coils of the stator. For example, for an electric motor in which coreless coils are used in a stator, it is desired to increase torque for rotating a rotor by increasing an amount of interlinking magnetic flux interlinking with the coils in a rotating magnetic field generated by application of a voltage to the coils of the stator. For a generator in which coreless coils are used in a stator, it is desired to increase a voltage induced in the coils by increasing the amount of interlinking magnetic flux interlinking with the coils in a rotating magnetic field generated by rotation of a rotor.

### CITATION LIST

### PATENT LITERATURE

Patent Literature 1: Jpn. Pat. Appln. KOKAI Publication No. H3-112345
Patent Literature 2: Jpn. Pat. Appln. KOKAI Publication No. 2019-122230
Patent Literature 3: International Publication No. 2007/032472

### SUMMARY

### TECHNICAL PROBLEM

An object of the present invention is to provide a stator structure in a rotating electric machine that can increase an amount of interlinking magnetic flux that interlinks with a coreless coil in a generated rotating magnetic field.

### SOLUTION TO PROBLEM

According to an embodiment, a stator structure in a rotating electric machine includes an inner coil layer and an outer coil layer. The inner coil layer includes a plurality of coreless inner coils, and the inner coils are arranged side by side in a circumferential direction in the inner coil layer. The outer coil layer includes a plurality of coreless outer coils, and the outer coils are arranged side by side in the circumferential direction on an outer peripheral side of the inner coil layer in a state not contacting the inner coils in the outer coil layer. In the rotating electric machine, a rotor is rotated by using a rotating magnetic field generated by applying a voltage to the inner coils and the outer coils, or a voltage is induced in the inner coils and the outer coils by a rotating magnetic field generated by rotation of a rotor. Each coil pitch of the inner coils and the outer coils is equal to or greater than an angle obtained by dividing 360° by a total number of the inner coils and the outer coils.

### BRIEF DESCRIPTION OF THE DRAWINGS

FIG. 1 is a cross-sectional view schematically illustrating a configuration of an electric motor according to a first embodiment in a cross section parallel or substantially parallel to an axial direction of the electric motor.
FIG. 2 is a schematic view illustrating a configuration of the electric motor according to the first embodiment as viewed from one side in an axial direction of the electric motor.
FIG. 3 is a cross-sectional view schematically illustrating a configuration of the electric motor according to the first embodiment in a cross section orthogonal or substantially orthogonal to an axial direction of the electric motor.
FIG. 4 is a perspective view schematically illustrating any one of an inner coil and an outer coil in the electric motor according to the first embodiment.

### DETAILED DESCRIPTION

Embodiments will be described with reference to drawings hereinbelow.

### (First Embodiment)

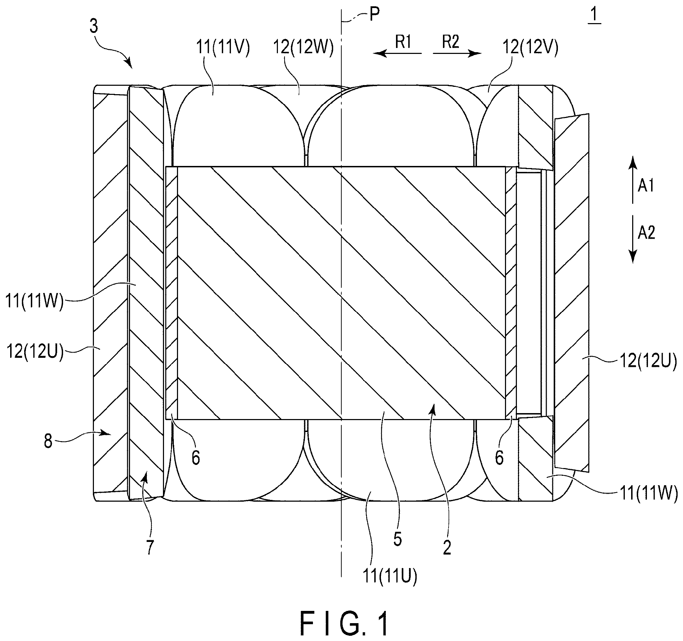

First, a first embodiment will be described as an example of an embodiment. In the first embodiment, an electric motor 1 will be described as an example of a rotating electric machine. FIGS. 1 to 3 illustrate a configuration of an electric motor 1 according to the first embodiment. The electric motor 1 is, for example, a permanent magnet motor. As illustrated in FIGS. 1 to 3, etc., the electric motor 1 includes a rotor 2 and a stator 3. The rotor 2 is rotatable with respect to the stator 3 with a rotation axis P serving as a center.

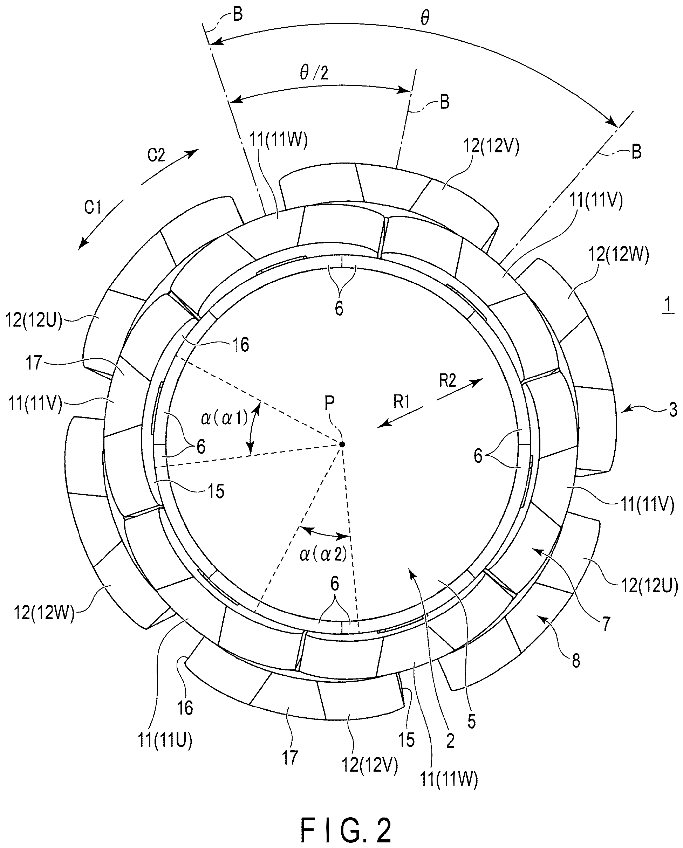

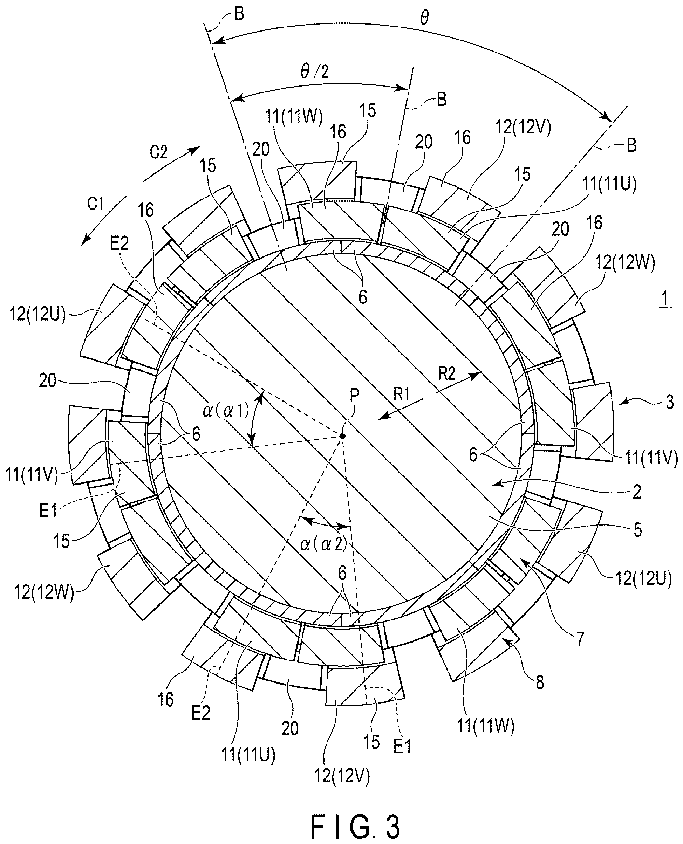

In the electric motor 1, a direction along the rotation axis P is defined as an axial direction (direction indicated with an arrow A1 and an arrow A2). In addition, in the electric motor 1, a direction around the rotation axis P is defined as a circumferential direction (direction indicated with an arrow C1 and an arrow C2). In the electric motor 1, a direction intersecting (orthogonal or substantially orthogonal to) both the axial direction and the circumferential direction is defined as a radial direction (an arrow R1 and an arrow R2). In the electric motor 1, a side close to the rotation axis P in the radial direction serves as an inner peripheral side, and a side distant from the rotation axis P in the radial direction serves as an outer peripheral side. FIG. 1 schematically illustrates a cross section parallel or substantially parallel to the axial direction of the electric motor 1. Further, FIG. 2 schematically illustrates a state of the electric motor 1 as viewed from one side in the axial direction, and FIG. 3 schematically illustrates a cross section of the electric motor 1 orthogonal or substantially orthogonal to the axial direction.

In the example of FIGS. 1 to 3, in the electric motor 1, the rotor 2 is arranged on the inner peripheral side of the stator 3 forming a stator structure. The stator 3 surrounds the rotor 2 from the outer peripheral side of the electric motor 1 over the entire circumference in the circumferential direction of the electric motor 1. The rotor 2 is coupled to the stator 3 in a state of being rotatable about the rotation axis P. The rotor 2 is coupled to the stator 3 via a bearing (not shown) or the like.

In the example of FIGS. 1 to 3, the rotor 2 includes a yoke 5 and a plurality of magnets (permanent magnets) 6. A central axis of the yoke 5 is coaxial or substantially coaxial with the rotation axis P. In the rotor 2, each of the magnets 6 is fixed to the outer peripheral surface of the yoke 5, and the plurality of magnets 6 are arranged side by side in the circumferential direction of the electric motor 1 to the outer peripheral surface of the yoke 5. In the rotor 2, a ring shape or a substantially ring shape centered or substantially centered on the rotation axis P is formed by the plurality of magnets 6 arranged in the circumferential direction of the electric motor 1.

The stator 3 includes an inner coil layer 7 and an outer coil layer 8. Each of the inner coil layer 7 and the outer coil layer 8 is formed in a ring shape or a substantially ring shape centered or substantially centered on the rotation axis P. Each of the inner coil layer 7 and the outer coil layer 8 surrounds the rotor 2 from the outer peripheral side of the electric motor 1 over the entire circumference in the circumferential direction of the electric motor 1. In the stator 3, the outer coil layer 8 is formed on the outer peripheral side of the electric motor 1 with respect to the inner coil layer 7. The outer coil layer 8 surrounds the inner coil layer 7 from the outer peripheral side of the electric motor 1 over the entire circumference in the circumferential direction of the electric motor 1.

The inner coil layer 7 includes a plurality of inner coils 11, and the outer coil layer 8 includes a plurality of outer coils 12. In the inner coil layer 7, the plurality of inner coils 11 are arranged side by side in the circumferential direction of the electric motor 1. In the stator 3, a ring shape or a substantially ring shape centered or substantially centered on the rotation axis P is formed by the plurality of inner coils 11 arranged side by side in the circumferential direction of the electric motor 1. In the outer coil layer 8, the plurality of outer coils 12 are arranged side by side in the circumferential direction of the electric motor 1. In the stator 3, a ring shape or a substantially ring shape centered or substantially centered on the rotation axis P is formed by the plurality of outer coils 12 arranged side by side in the circumferential direction of the electric motor 1.

With the above-described configuration, in the stator 3, the plurality of outer coils 12 are arranged side by side in the circumferential direction of the electric motor 1 on the outer peripheral side of the inner coil layer 7 constituted by the plurality of inner coils 11. Therefore, the ring shape or the substantially ring shape formed by the plurality of outer coils 12 surrounds the ring shape or the substantially ring shape formed by the plurality of inner coils 11 from the outer peripheral side of the electric motor 1 over the entire circumference in the circumferential direction of the electric motor 1. In addition, each of the outer coils 12 has a gap between the outer coil 12 and the inner coil 11 of the inner coil layer 7 in the radial direction of the electric motor 1. Therefore, each of the outer coils 12 is arranged in a state not contacting any of the inner coils 11.

Each of the inner coils 11 and the outer coils 12 is formed by winding a coil winding. Each coil winding of the inner coils 11 and the outer coils 12 is electrically conductive and is formed of, for example, an electrically conductive metal. Each coil winding of the inner coils 11 and the outer coils 12 is formed of, for example, any of copper, aluminum, iron, and the like. In the inner coils 11 and the outer coils 12, the coil windings may be formed of the same material as each other or may be formed of different materials from each. Each of the inner coils 11 and the outer coils 12 is a coreless coil in which no iron core is provided. Therefore, the electric motor 1 is a coreless motor or the like in which the inner coils 11 and the outer coils 12, which are coils of the stator 3, are coreless.

In the present embodiment, the rotor 2 is arranged on the inner peripheral side of the stator 3. The inner coil 11 of the two types of coils, which are the inner coil 11 and the outer coil 12, is a first coil which is a type arranged on the side close to the rotor 2. The outer coil 12 of the two types of coils, which are the inner coil 11 and the outer coil 12, is a second coil which is a type arranged on the side distant from the rotor 2.

In the electric motor 1, a voltage can be applied to the inner coils 11 and the outer coils 12, and a magnetic field is generated by applying a voltage to the inner coils 11 and the outer coils 12. Then, by chronologically changing the magnetic field generated by the inner coils 11 and the outer coils 12 by applying a voltage to the inner coils 11 and the outer coils 12, or the like, the rotor 2 is rotated around the rotation axis P. Therefore, in the present embodiment, the rotor 2 is rotated by the rotating magnetic field generated by application of the voltage to the inner coils 11 and the outer coils 12.

In an example, three phases of power having different phases from each other is supplied to the stator 3. In this case, one or more of each of a U-phase inner coil 11U, a V-phase inner coil 11V, and a W-phase inner coil 11W are provided as the inner coil 11, and one or more of each of a U-phase outer coil 12U, a V-phase outer coil 12V, and a W-phase outer coil 12W are provided as the outer coil 12. In the example of FIGS. 1 to 3, etc., two inner coils 11U, two inner coils 11V, and two inner coils 11W are provided, and two outer coils 12U, two outer coils 12V, and two outer coils 12W are provided. Therefore, the number of coils provided in the stator 3, that is, the total number of the inner coils 11 and the outer coils 12, is 12.

In the stator 3, the inner coils 11U and the outer coils 12U of the U phase are electrically connected in series or in parallel to each other via an electric wire (not shown) or the like. Then, a U-phase voltage is applied to the inner coils 11U and the outer coils 12U. Similarly, the inner coil 11V and the outer coil 12V of the V phase are electrically connected in series or in parallel to each other via an electric wire (not shown) or the like, and a voltage of the V phase is applied to the inner coil 11V and the outer coil 12V. The inner coil 11W and the outer coil 12W of the W phase are electrically connected in series or in parallel to each other via an electric wire (not shown) or the like, and a voltage of the W phase is applied to the inner coil 11W and the outer coil 12W.

In an example, the rotating magnetic field is generated as described above by applying a voltage to the inner coil 11 and the outer coil 12. Then, an electromotive force is induced in the rotor 2 by the generated rotating magnetic field, and the rotor 2 is rotated by the induced electromotive force. Therefore, the electric motor 1 may be configured to rotate the rotor 2 by using the rotating magnetic field generated by applying the voltage to the inner coil 11 and the outer coil 12 of the stator 3.

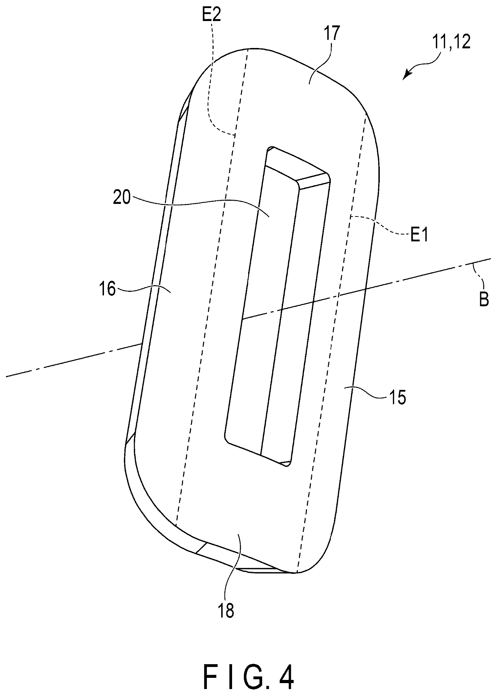

FIG. 4 illustrates any one of the inner coil 11 and the outer coil 12. Each of the inner coil 11 and the outer coil 12 has the same configuration as that shown in FIG. 4. As shown in FIG. 4, etc., each of the inner coil 11 and the outer coil 12 has a winding axis B, and the coil winding is wound around the winding axis B in each of the inner coil 11 and the outer coil 12. In the example of FIGS. 1 to 3, etc., each winding axis B of the inner coil 11 and the outer coil 12 extends along the radial direction of the electric motor 1. In each of the inner coil 11 and the outer coil 12, the number of turns N indicating the number of turns of the coil winding around the winding axis B is defined.

Each of the inner coil 11 and the outer coil 12 includes a pair of coil side portions 15 and 16 and a pair of folded portions 17 and 18. In each of the inner coil 11 and the outer coil 12, the coil side portions 15 and 16 are positioned apart from each other in the circumferential direction of the electric motor 1, and a space 20 is formed between the coil side portions 15 and 16 in the circumferential direction of the electric motor 1. Therefore, in each of the inner coil 11 and the outer coil 12, the coil side portion (first coil side portion) 15 is located on the opposite side of the coil side portion (second coil side portion) 16 with the space 20 therebetween. In each of the inner coil 11 and the outer coil 12, the winding axis B extends through the space 20. In each of the inner coil 11 and the outer coil 12, the coil winding is extended along the axial direction of the electric motor 1 in each of the coil side portions 15 and 16.

In each of the inner coil 11 and the outer coil 12, the folded portions 17 and 18 are positioned apart from each other in the axial direction of the electric motor 1, and the above-described space 20 through which the winding axis B passes is formed between the folded portions 17 and 18 in the axial direction of the electric motor 1. Therefore, in each of the inner coil 11 and the outer coil 12, the folded portion (first folded portion) 17 is located on the opposite side of the folded portion (second folded portion) 18 with the space 20 therebetween. In each of the inner coil 11 and the outer coil 12, the coil winding is folded back at each of the folded portions 17 and 18. With the above-described configuration, each of the inner coil 11 and the outer coil 12 is formed in a ring shape or a substantially ring shape in which the space 20 is surrounded over the entire circumference around the winding axis B by the portions constituted by the coil side portions 15 and 16 and the folded portions 17 and 18.

In the case where the inner coil layer 7 includes the inner coils 11U, 11V, and 11W of three phases, in the inner coil layer 7, the V-phase inner coil 11V is arranged in a state adjacent to one side, in the circumferential direction of the electric motor 1, of each of the U-phase inner coils 11U. In the inner coil layer 7, the W-phase inner coil 11W is arranged in a state adjacent to each of the U-phase inner coils 11U on the opposite side of the V-phase inner coil 11V in the circumferential direction of the electric motor 1. In the example of FIGS. 1 to 3, etc., six inner coils 11 are provided. In the inner coil layer 7, each winding axis B of the inner coil 11 is arranged to be shifted by an angle of 60° or substantially 60° with respect to the winding axis B of the adjacent inner coil 11 in the circumferential direction of the electric motor 1.

In addition, in a case where the outer coils 12U, 12V, and 12W of three phases are provided in the outer coil layer 8, in the outer coil layer 8, the outer coil 12V of the V phase is arranged in a state adjacent to one side, in the circumferential direction of the electric motor 1, of each of the outer coils 12U of the U phase. In the outer coil layer 8, the outer coil 12W of the W phase is arranged in a state adjacent to each of the outer coils 12U of the U phase on the opposite side of the outer coil 12V of the V phase in the circumferential direction of the electric motor 1. In the example of FIGS. 1 to 3, etc., six outer coils 12 are provided. In the outer coil layer 8, each winding axis B of the outer coils 12 is arranged to be shifted by an angle of 60° or substantially 60° with respect to the winding axis B of the adjacent outer coil 12 in the circumferential direction of the electric motor 1.

In the present embodiment, each of the outer coils 12 constituting the outer coil layer 8 is arranged at an angular position shifted from any of the inner coils 11 constituting the inner coil layer 7 in the circumferential direction of the electric motor 1. In the electric motor 1, the winding axis B of a corresponding one of the outer coils 12 is located at an angular position between the winding axes B of two inner coils 11 adjacent to each other in the circumferential direction. In an example, the winding axes B of two adjacent inner coils 11 are arranged to be shifted from each other by an angle θ in the circumferential direction of the electric motor 1. Each of the winding axes B of two adjacent inner coils 11 are arranged to be shifted by an angle θ/2 in the circumferential direction of the electric motor 1 with respect to the winding axis B of the outer coil 12 arranged between the winding axes B of these two inner coils 11. In the case where six inner coils 11 and six outer coils 12 are provided as in the example of FIGS. 1 to 3, etc., the angle θ is 60° or substantially 60°, and the angle θ/2 is 30° or substantially 30°.

In addition, it is assumed that the inner coil layer 7 is provided with inner coils 11U, 11V, and 11W of three phases, and the outer coil layer 8 is provided with outer coils 12U, 12V, and 12W of three phases. In this case, each of the outer coils 12U of the U phase is arranged between the inner coil 11V of the V phase and the inner coil 11W of the W phase adjacent to each other in the inner coil layer 7 in the circumferential direction of the electric motor 1. Further, each of the V-phase outer coils 12V is arranged between the W-phase inner coil 11W and the U-phase inner coil 11U adjacent to each other in the inner coil layer 7 in the circumferential direction of the electric motor 1. Each of the W-phase outer coils 12W is arranged between the U-phase inner coil 11U and the V-phase inner coil 11V adjacent to each other in the inner coil layer 7 in the circumferential direction of the electric motor 1.

In each of the inner coil 11 and the outer coil 12, a central position E1 of the coil side portion 15 in the circumferential direction of the electric motor 1 is defined, and a central position E2 of the coil side portion 16 in the circumferential direction of the electric motor 1 is defined. In each of the inner coil 11 and the outer coil 12, an angle between the central position E1 of the coil side portion 15 and the central position E2 of the coil side portion 16 in the circumferential direction of the electric motor 1 is defined as a coil pitch α.

In each of the inner coil 11 and the outer coil 12, the coil pitch α is equal to or larger than an angle αref obtained by dividing 360°, which is an angle corresponding to the entire circumference, by the total number of the inner coils 11 and the outer coils 12. In the example of FIGS. 1 to 3, the total number of the inner coils 11 and the outer coils 12 is 12, and the angle αref is 30°. Each coil pitch α of the inner coils 11 and the outer coils 12 is 30° or more.

Further, as the coil pitch α described above, each coil pitch α1 of the inner coils 11 and each coil pitch α2 of the outer coils 12 are defined. In an example of the present embodiment, each coil pitch α1 of the inner coils 11 is different from each coil pitch α2 of the outer coils 12. Each coil pitch α1 of the inner coils 11 is larger than each coil pitch α2 of the outer coils 12.

In this example, as described above, of the two types of coils, the inner coil 11 and the outer coil 12, the inner coil 11 is the first coil, which is the type arranged on the side close to the rotor 2, and the outer coil 12 is the second coil, which is the type arranged on the side distant from the rotor 2. Therefore, the coil pitch α of each of the inner coils 11, which are the first coils, is larger than that of each of the outer coils 12, which are the second coils. In an example, in a configuration in which six inner coils 11 and six outer coils 12 are provided, each coil pitch α1 of the inner coils 11, which are the first coils, is 37.5°, and each coil pitch α2 of the outer coils 12, which are the second coils, is 32.5°.

In the inner coil layer 7, the coil pitches α1 of the plurality of inner coils 11 may be the same as each other or may be different from each other. In the outer coil layer 8, the coil pitches α2 of the plurality of outer coils 12 may be the same as each other or may be different from each other. However, in this example, even in the case where the coil pitches α1 of the plurality of inner coils 11 are different from each other, and even in the case where the coil pitches α2 of the plurality of outer coils 12 are different from each other, each coil pitch α1 of the inner coils 11 is larger than each coil pitch α2 of the outer coils 12.

Further, as the number of turns N described above, each number of turns N1 of the inner coils 11 and each number of turns N2 of the outer coils 12 are defined. In an example of the present embodiment, each number of turns N1 of the inner coils 11 is different from each number of turns N2 of the outer coils 12. Each number of turns N1 of the inner coils 11 is larger than each number of turns N2 of the outer coils 12.

With the above-described configuration, in this example, the number of turns N of each of the inner coils 11, which are the first coils arranged on the side close to the rotor 2, is larger than the number of turns N of each of the outer coils 12, which are the second coils arranged on the side distant from the rotor 2. In an example, in a configuration in which six inner coils 11 and six outer coils 12 are provided, the number of turns N1 of each of the inner coils 11, which are the first coils, is 6.5, and the number of turns N2 of each of the outer coils 12, which are the second coils, is 6.

In the inner coil layer 7, the number of turns N1 of the plurality of inner coils 11 may be the same as each other or may be different from each other. In the outer coil layer 8, the number of turns N2 of the plurality of outer coils 12 may be the same as each other or may be different from each other. However, in this example, even in the case where the number of turns N1 of the plurality of inner coils 11 are different from each other, and even in the case where the number of turns N2 of the plurality of outer coils 12 are different from each other, and the like, each number of turns N1 of the inner coils 11 is larger than each number of turns N2 of the outer coils 12.

As described above, in the present embodiment, the outer coil layer 8 is provided on the outer peripheral side of the inner coil layer 7 in the stator 3, and two coil layers are formed. In the inner coil layer 7, a plurality of coreless inner coils 11 are arranged side by side in the circumferential direction, and in the outer coil layer 8, a plurality of coreless outer coils 12 are arranged side by side in the circumferential direction in a state not contacting the inner coils 11. With this configuration, it is possible to increase the area occupied by the inner coils 11 and the outer coils 12 in the stator 3.

In the present embodiment, each coil pitch α of the inner coils 11 and the outer coils 12 is equal to or larger than the angle αref obtained by dividing 360° by the total number of the inner coils 11 and the outer coils 12. This increases the angular range occupied by each of the inner coils 11 and the outer coils 12 in the circumferential direction of the electric motor 1, and further increases the area occupied by the inner coils 11 and the outer coils 12 in the stator 3. The increase in the area occupied by the inner coils 11 and the outer coils 12 makes it possible to increase the amount of interlinking magnetic flux that interlinks with the inner coils 11 and the outer coils 12 in the rotating magnetic field generated by the application of the voltage to the inner coils 11 and the outer coils 12 of the stator 3. In the electric motor 1, since the amount of interlinking magnetic flux interlinking with the inner coils 11 and the outer coils 12 increases, the torque for rotating the rotor 2 increases, and the torque characteristics of the electric motor 1 improves.

In the present embodiment, the outer coils 12 are overlapped on the outer peripheral side of the inner coils 11 without forming a bent portion or the like in the radial direction of the electric motor 1 in each of the inner coils 11 and the outer coils 12. Thus, by arranging each of the outer coils 12 in a state of having a gap between the inner coils 11 and the outer coils 12, even if two coil layers are formed in the stator 3, contact of each of the inner coils 11 and the outer coils 12 with the other coils is effectively prevented. Therefore, in a configuration in which multi-phase electric power such as three phases of power is supplied to the stator 3, contact between the coils having different phases from each other is effectively prevented, and electrical insulation between coils having different phases from each other is appropriately ensured.

In addition, in an example of the present embodiment, the coil pitch α of each of the inner coils 11, which are the first coils arranged on the side close to the rotor 2, is larger than that of each of the outer coils 12, which are the second coils arranged on the side distant from the rotor 2. In the configuration in which the rotor 2 is located on the inner peripheral side with respect to the stator 3, by increasing each coil pitch α1 of the inner coils 11, which are the first coils arranged on the side close to the rotor 2, the amount of interlinking magnetic flux in the coils (inner coils 11) in a position close to the rotor 2 increases in the generated rotating magnetic field. This further increases the torque for rotating the rotor 2, and further improves the torque characteristics of the electric motor 1.

In an example of the present embodiment, the number of turns N of each of the inner coils 11, which are the first coils arranged on the side close to the rotor 2, is larger than that of each of the outer coils 12, which are the second coils arranged on the side distant from the rotor 2. In the configuration in which the rotor 2 is located on the inner peripheral side with respect to the stator 3, by increasing each number of turns N1 of the inner coils 11, which are the first coils arranged on the side close to the rotor 2, each coil pitch α1 of the inner coils 11 can be appropriately increased.

### (Modifications)

In the above-described embodiment and the like, the rotor 2 is arranged on the inner peripheral side of the stator 3, but in a certain modification, the rotor 2 is arranged on the outer peripheral side of the stator 3 in the electric motor 1. Also in this case, the stator 3 includes the inner coil layer 7 and the outer coil layer 8, and each coil pitch α of the plurality of inner coils 11 of the inner coil layer 7 and the plurality of outer coils 12 of the outer coil layer 8 is equal to or larger than an angle αref obtained by dividing 360° by a total number of the inner coils 11 and the outer coils 12, as in the above-described embodiment and the like. Also in the present modification, this increases the area occupied by the inner coils 11 and the outer coils 12 in the stator 3, and can increase the amount of interlinking magnetic flux that interlinks with the inner coils 11 and the outer coils 12 in the generated rotating magnetic field.

However, in the present modification, the outer coil 12 of the two types of coils, namely, the inner coil 11 and the outer coil 12, is the first coil, which is the type arranged on the side close to the rotor 2. The inner coil 11 of the two types of coils, namely, the inner coil 11 and the outer coil 12, is the second coil, which is the type arranged on the side distant from the rotor 2.

Therefore, in the present modification, it is preferable that the coil pitch α of each of the outer coils 12, which are the first coils arranged on the side close to the rotor 2, be larger than that of each of the inner coils 11, which are the second coils arranged on the side distant from the rotor 2. In the configuration in which the rotor 2 is located on the outer peripheral side with respect to the stator 3, by increasing each coil pitch α2 of the outer coils 12, which are the first coils arranged on the side close to the rotor 2, the amount of interlinking magnetic flux in the coils (outer coils 12) in a position close to the rotor 2 increases in the generated rotating magnetic field. This further increases the torque for rotating the rotor 2, and further improves the torque characteristics of the electric motor 1.

In the present modification, it is preferable that the number of turns N of each of the outer coils 12, which are the first coils arranged on the side close to the rotor 2, be larger than the number of turns N of each of the inner coils 11, which are the second coils arranged on the side distant from the rotor 2. In the configuration in which the rotor 2 is located on the outer peripheral side with respect to the stator 3, each coil pitch α2 of the outer coils 12 can be appropriately increased by increasing each number of turns N2 of the outer coils 12, which are the first coils arranged on the side close to the rotor 2.

The stator structure of the stator 3 in the electric motor 1 of the above-described embodiment and the like is also applicable as a stator structure of a stator in a generator. In the generator, a rotating magnetic field is generated by rotating a rotor. A rotating magnetic field generated by the rotation of the rotor induces a voltage (electromotive force) in the inner coil 11 and the outer coil 12 described above, which are coils of the stator.

In the stator structure of the generator, the stator 3 includes the inner coil layer 7 and the outer coil layer 8, and each coil pitch α of the plurality of inner coils 11 of the inner coil layer 7 and the plurality of outer coils 12 of the outer coil layer 8 is equal to or larger than the angle αref obtained by dividing 360° by the total number of the inner coils 11 and the outer coils 12. This increases the area occupied by the inner coils 11 and the outer coils 12 in the stator 3, and it becomes possible to increase the amount of interlinking magnetic flux interlinking with the inner coils 11 and the outer coils 12 in the rotating magnetic field generated by the rotation of the rotor 2. In the generator, since the amount of magnetic flux interlinking with the inner coils 11 and the outer coils 12 increases, the voltage induced in the inner coils 11 and the outer coils 12 (the coils of the stator 3) appropriately increases.

In the stator structure of the generator, it is preferable that the coil pitch α of each of the first coils, which are the type of the inner coil 11 and the outer coil 12 arranged on the side close to the rotor 2, be larger than the coil pitch α of each of the second coils, which are the type of the inner coils 11 and the outer coils 12 arranged on the side distant from the rotor 2. It is preferable that the number of turns N of each of the first coils be larger than that of each of the second coils. In the stator structure of the generator, by increasing each coil pitch of the first coils arranged on the side close to the rotor 2, the amount of interlinking magnetic flux with the coils in a position close to the rotor 2 increases in the generated rotating magnetic field. This further increases the voltage induced in the coils of the stator 3.

According to at least one of these embodiments or examples, in the inner coil layer, the plurality of coreless inner coils are arranged side by side in the circumferential direction, and in the outer coil layer, the plurality of coreless outer coils are arranged side by side in the circumferential direction on the outer peripheral side of the inner coil layer in a state not contacting the inner coils. Each coil pitch of the inner coils and the outer coils is equal to or larger than an angle obtained by dividing 360° by the total number of the inner coils and the outer coils. Accordingly, it is possible to provide a stator structure in a rotating electric machine that can increase the amount of interlinking magnetic flux that interlinks with a coreless coil in a generated rotating magnetic field.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A stator structure in a rotating electric machine, comprising:
an inner coil layer including a plurality of coreless inner coils, the inner coils being arranged side by side in a circumferential direction; and
an outer coil layer including a plurality of coreless outer coils, the outer coils being arranged side by side in the circumferential direction on an outer peripheral side of the inner coil layer in a state not contacting the inner coils, wherein
a rotor is rotated by using a rotating magnetic field generated by applying a voltage to the inner coils and the outer coils, or a voltage is induced in the inner coils and the outer coils by a rotating magnetic field generated by rotation of a rotor, and
each coil pitch of the inner coils and the outer coils is equal to or greater than an angle obtained by dividing 360° by a total number of the inner coils and the outer coils.

2. The stator structure according to claim 1, wherein
each coil pitch of the outer coils is different from each coil pitch of the inner coils.

3. The stator structure according to claim 2, wherein
the coil pitch of each of first coils, which are one of the inner coils and the outer coils that are arranged on a side close to the rotor, is larger than the coil pitch of each of second coils, which are one of the inner coils and the outer coils that are arranged on a side distant from the rotor.

4. The stator structure according to any one of claims 1 to 3, wherein
each number of turns of the outer coils is different from each number of turns of the inner coils.

5. The stator structure according to claim 4, wherein
the number of turns of each of first coils, which are one of the inner coils and the outer coils that are arranged on a side close to the rotor, is larger than the number of turns of each of second coils, which are one of the inner coils and the outer coils that are arranged on a side distant from the rotor.
